# EUROPEAN PATENT APPLICATION

(11) **EP 3 647 021 A1**
(43) Date of publication of application: **06.05.2020**
(21) Application number: 18204078.2
(22) Date of filing: 02.11.2018
(51) Int. Cl.: B29C 64/264, B29C 64/393, B33Y 30/00, B33Y 40/00, B33Y 50/02, G01J 1/04, B23K 26/70, B22F 3/105, G01J 1/42

(54) **DETERMINATION DEVICE FOR DETERMINING AT LEAST ONE PARAMETER OF AN ENERGY BEAM**

(71) Applicant: Concept Laser GmbH, 96215 Lichtenfels (DE)
(72) Inventor: Dr.-Ing. Hunze, Stephan, 01796 Pirna (DE); Junge, Jens, 96465 Neustadt bei Coburg (DE)
(74) Representative: Hafner & Kohl PartmbB

(57) **Abstract**

Determination device (1) for determining at least one parameter of an energy beam (5) for an apparatus (3) for additively manufacturing three-dimensional objects by means of successive layerwise selective irradiation and consolidation of layers of a build material which can be consolidated by means of an energy beam (5), wherein the determination device (1) comprises a beam guiding element (12) adapted to guide the energy beam (5) to a determination unit (7) which is adapted to determine at least one parameter of the energy beam (5), wherein the determination unit (7) and the beam guiding element (12) are arranged as a determination assembly in a defined spatial arrangement relative to each other, wherein the determination assembly is movable, in particular rotatable, into at least a first and a second determination position, wherein the determination unit (7) is adapted to receive the energy beam (5) being guided to a first spatial position from the beam guiding element (12) in the first determination position and to receive the energy beam (5) being guided to a second spatial position from the beam guiding element (12) in the second determination position.

## Description

The invention relates to a determination device for determining at least one parameter of an energy beam for an apparatus for additively manufacturing three-dimensional objects by means of successive layerwise selective irradiation and consolidation of layers of a build material which can be consolidated by means of an energy beam.

Apparatuses for additively manufacturing three-dimensional objects using energy beams to selectively consolidate build material are generally known from prior art. Typically, determination devices are used for determining parameters of the energy beam to ensure that the correct amount of energy is deposited at the correct position in the build material. Such determination devices can, for example, be arranged inside the process chamber of the apparatus and the energy beam can be guided onto a determination plane, for example a detector, of the determination device, wherein multiple parameters of the energy beam, such as the position, the intensity or the like can be determined.

Further, it is known from prior art that dependent on the position of the energy beam, for example dependent on the deflection angle under which the energy beam is incident on the build plane, the shape of the energy beam, e.g. a spot shape can deviate from the typical circular or annular spot, i.e. the spot of the energy beam can be deformed to an elliptical shape. In this case, it is possible that due to the deformed shape of the spot, the energy beam is not completely incident on the detector of the determination device or the angle of incidence is out of a defined range in which the detector may properly receive the energy beam. Hence, the measurement result may be incorrect, as parts of the energy beam are not considered.

It is an object of the present invention to provide an improved determination device, in particular a determination device that allows for receiving the whole energy beam via the determination device independent of the deflection angle.

The object is inventively achieved by a determination device according to claim 1. Advantageous embodiments of the invention are subject to the dependent claims.

The determination device described herein is a determination device for an apparatus for additively manufacturing three-dimensional objects, e.g. technical components, by means of successive selective layerwise consolidation of layers of a powdered build material ("build material") which can be consolidated by means of an energy beam, in particular a laser beam. A respective build material can be a metal, ceramic or polymer powder. A respective energy beam can be a laser beam. A respective apparatus can be an apparatus in which an application of build material and a consolidation of build material is performed separately, such as a selective laser sintering apparatus or a selective laser melting apparatus, for instance.

The apparatus may comprise a number of functional units which are used during its operation. Exemplary functional units are a process chamber, an irradiation device which is adapted to selectively irradiate a build material layer disposed in the process chamber with at least one energy beam, and a stream generating device which is adapted to generate a gaseous fluid stream at least partly streaming through the process chamber with given streaming properties, e.g. a given streaming profile, streaming velocity, etc. The gaseous fluid stream is capable of being charged with non-consolidated particulate build material, particularly smoke or smoke residues generated during operation of the apparatus, while streaming through the process chamber. The gaseous fluid stream is typically inert, i.e. typically a stream of an inert gas, e.g. argon, nitrogen, carbon dioxide, etc.

As described before, the invention relates to a determination device for determining a parameter of the energy beam used in additive manufacturing processes to selectively consolidate the build material. The invention is based on the idea that at least one beam guiding element is provided that is adapted to guide the energy beam to a determination unit which is adapted to determine at least one parameter of the energy beam, wherein the determination unit and the beam guiding element are arranged as a determination assembly in a defined spatial arrangement relative to each other, wherein the determination assembly is movable, in particular rotatable, into at least a first and a second determination position, wherein the determination unit is adapted to receive the energy beam being guided to a first spatial position from the beam guiding element in the first determination position and to receive the energy beam being guided to a second spatial position from the beam guiding element in the second determination position.

According to the invention it is possible to guide the energy beam into the process chamber to the determination assembly which is arranged in the process chamber, e.g. in the build plane. The determination assembly comprises the determination unit, e.g. providing a detector, such as a photodiode, CMOS or CCD camera, and a beam guiding element, such as a mirror or comprising a mirror. The beam guiding element and the determination unit are arranged in a defined spatial arrangement, e.g. in defined spatial (relative) positions and orientations relative to each other. Preferably, the defined spatial arrangement between the determination unit and the beam guiding element is fixed and cannot be varied. Instead, the determination assembly can be moved or is movable, in particular rotatable with respect to a rotation axis, preferably extending perpendicular to the determination unit.

Thus, the determination assembly may be moved into at least a first and a second determination position in which at least one parameter of the energy beam can be determined, in particular detected, via the determination device. Of course, it is possible to determine a parameter of the energy beam in an arbitrary number of spatial positions or for an arbitrary number of spatial positions in which the energy beam can be positioned. For the sake of simplicity the invention and the advantageous embodiments are described with respect to a determination assembly being movable in at least a first and a second position, wherein, of course, the determination assembly may be moved to or between an arbitrary number of determination positions, e.g. more than three determination positions.

The determination unit is adapted to receive the energy beam from the beam guiding element, wherein the energy beam is guided to the beam guiding element corresponding to the actual determination position in which the determination assembly is positioned. In other words, the energy beam is guided to a first position in which the beam guiding element is arranged in the corresponding first determination position, wherein the energy beam is guided, e.g. reflected, via the beam guiding element towards the determination unit allowing for a determination of the at least one parameter of the energy beam. Subsequently, the energy beam may be guided to at least a second position, e.g. in the build plane, wherein the determination assembly may be moved to the second determination position in which the beam guiding element is arranged in the second determination position to guide the energy beam to the determination unit. As described before, it is possible to have an arbitrary number of determination positions corresponding to an arbitrary number of positions in which the energy beam can be guided via the beam guiding element to the determination unit or in which the at least one parameter of the energy beam has to be determined in a determination process, respectively.

Therefore, it is possible to guide the energy beam into the process chamber, e.g. to a build plane in which the determination assembly of the determination device is arranged. Dependent on the position of the energy beam, the determination assembly can be moved, in particular rotated, in that the energy beam is incident on the beam guiding element and can be guided to the determination unit. Therefore, it is possible that the energy beam is not directly received via the determination unit, for example by a determination unit providing a determination element arranged in the build plane, but the energy beam can be reflected or otherwise guided via the beam guiding element to the determination unit to ensure that the energy beam is properly received by the determination unit. It is also ensured that the spatial position of the determination unit inside the process chamber can be static and that the determination unit is merely rotated between the individual determination positions. Thus, the spatial position in which the energy beam is received via the determination unit is always the same and the direction under which the energy beam is guided towards the determination unit varies with the position of the beam guiding element to which the energy beam is guided.

Further, the inventive determination device allows for determining the at least one parameter of the energy beam in multiple (at least two) determination positions in the build plane, wherein the energy beam incident in a first position can be guided via the beam guiding element in the first determination position towards the determination unit and an energy beam incident in a second position can be guided via the beam guiding element in a second determination position towards the determination unit. In other words, the energy beam can be guided to / scanned across different positions (of the build plane), wherein in a first position of the energy beam the beam guiding element may be arranged in a first determination position, guiding the energy beam that is incident on the beam guiding element to the determination unit. Accordingly, the energy beam may be guided to a second position (in the build plane), wherein the beam guiding element may be arranged in a second determination position for guiding the energy beam to the determination unit.

Hence, it is particularly possible to use the inventive determination device to determine the at least one parameter of the energy beam, e.g. the power / the amount of energy that is deposited via the energy beam, in different determination positions, e.g. for different positions in the build plane. Therefore, it is possible to use the determination device for processes in which the energy beam is scanned between different positions across the build plane, preferably to characterize such processes regarding the amount of energy that is deposited in the individual determination positions. Thus, it can be assured via the inventive determination device, that a predefined amount of energy (with a predefined energy distribution) can be deposited in each determination position. This allows for verifying that in each determination position the proper amount of energy is deposited and therefore, build material arranged in the corresponding position may be properly irradiated in a regular mode of operation.

According to a first embodiment of the inventive determination device, the beam guiding element and the determination unit are mounted to a determination body, in particular a determination plate, which determination body is moveable, in particular rotatable with respect to a rotation axis. In other words, a plate-like body can be provided to which the beam guiding element and the determination unit can be mounted. The determination body can be arranged in the process chamber, for example in the build plane, e.g. on a carrying element that is used to carry the powder bed, i.e. the object and the non-consolidated build material, in a regular mode of operation. In order to determine the at least one parameter of the energy beam the determination body can be arranged in the process chamber and the energy beam can be guided to the individual positions on the determination body in which the at least one parameter of the energy beam has to be determined. The determination assembly can be moved to the corresponding determination position, dependent on the spatial position to which the energy beam is guided, as described before. For example, the determination body can be rotated to position the beam guiding element in the correct determination position in which the energy beam may be guided via the beam guiding element towards the determination unit.

The determination body is preferably round, in particular circular for allowing a rotation of the determination body, e.g. in a rectangular or square powder module. Of course, it is also possible that the determination body is rectangular or of any other arbitrary shape, wherein the round shape of the determination body is preferred for simplifying the movement of the determination assembly. Preferably, the determination unit is arranged centrally with respect to the beam guiding element, e.g. centrally on the rotation axis around which the determination assembly may be rotated, wherein the determination unitpreferably rotates in place, whereas the beam guiding element may be rotated around the determination unit. By arranging the determination unit centrally with respect to the beam guiding element, e.g. with respect to the different determination positions in which the beam guiding element may be positioned due to a movement of the determination body, it is possible that the determination assembly, i.e. the determination unit and the beam guiding element, only has to be rotated to be moved into / reach the individual determination positions.

Preferably, the beam guiding element is movable between two determination positions via a rotational movement around the determination unit, wherein the beam guiding unit is arranged facing towards the determination unit. In other words, according to this embodiment, the determination unit may be arranged (symmetrically) on the rotational axis around which the determination assembly may be rotated. Hence, the beam guiding element is arranged in a predefined distance spaced away from the rotation axis and can be rotated around the rotation axis, wherein the beam guiding element faces the determination unit in each determination position and during the rotational movement between the two determination positions. In each determination position and during the movement of the determination assembly between two determination positions, the surface via which the beam guiding element reflects and guides the energy beam faces the surfaces of the determination unit via which the determination unit receives the energy beam, e.g. a detector surface. Hence, the defined spatial arrangement between the determination unit and the beam guiding element is fixed and only the determination assembly as a whole is rotated around the rotation axis. Thus, the determination assembly changes the orientation between the at least two determination positions as a whole, but the defined spatial arrangement (relative position, orientation) between the determination unit and the beam guiding element remains unchanged.

Further, the beam guiding element may be built as or may comprise a reflective element for reflecting the energy beam towards the determination unit, in particular a parabolic mirror. Hence, the energy beam can be guided to the beam guiding element from which it is reflected via the reflective element to the determination unit. The beam guiding element may further be adapted to collimate the energy beam, as, for example, the beam guiding element may be built as off-axis parabolic mirror. By using a parabolic mirror it is further possible to collimate the energy beam that is usually focused to a position in the build plane in which the determination device is arranged or is arrangeable, i.e. the plane in which build material is arranged to be irradiated in a regular mode of operation of an apparatus for additively manufacturing three-dimensional objects.

Hence, the determination of the at least one parameter of the energy beam can be performed with a collimated beam with defined beam properties, e.g. a defined spot diameter. Further, the angle of incidence can be controlled in that, preferably the energy beam is incident perpendicular on the determination unit. As the determination unit does only have to be rotated (together with the rest of the determination assembly) between the at least two determination positions, the repeatability, comparability and accuracy of the determination process can be enhanced. Hence, the inventive determination device provides an efficient way to determine the at least one parameter improving the quality of the results.

According to another embodiment of the inventive determination device, the determination unit may be adapted to rotate in the at least two determination positions in a predefined order, in particular corresponding to a sequence in which the energy beam is guided to the at least two positions of the beam guiding element or in which at least two positions the beam guiding element may be positioned by moving the determination assembly to the individual determination positions. Hence, it is possible to perform the determination process automatically, wherein the energy beam is guided to the individual positions of the beam guiding element in a predefined sequence. The determination assembly can be rotated to the corresponding determination positions, e.g. via a rotation stage coupled with the determination body, preferably comprising an actuator, such as a motor.

Hence, it is assured that the energy beam is properly guided to the beam guiding element and from the beam guiding element that is irradiated with the energy beam to the determination unit that faces the beam guiding element. Hence, every position in which the beam guiding element is or can be positioned, e.g. the different determination positions between which the beam guiding element may be rotated, can be used to determine the at least one parameter of the energy beam. By performing the determination process automatically, the determination process can be performed more efficiently.

According to another embodiment of the inventive determination device, at least one central beam guiding element may be arranged above the determination unit and adapted to guide the energy beam to the (other) beam guiding element, wherein the determination unit is adapted to receive the energy beam from the at least one beam guiding element, as described before. Hence, a central beam guiding element may be arranged above the determination unit, e.g. in that an energy beam that is guided perpendicular onto the build plane is incident on the central beam guiding element. In order to determine the at least one parameter of the energy beam with the same determination unit, the energy beam is guided (perpendicular) to the central beam guiding element from where it is reflected to the (other) beam guiding element, which (other) beam guiding element is adapted to guide the energy beam to the determination unit, as described before. Hence, the central beam guiding element can also be considered as part of the determination assembly and can be rotated together with the determination unit and the beam guiding element between the at least two determination positions.

The at least one central beam guiding element is arranged on top of the determination unit or above the determination unit, respectively. Hence, the energy beam can be guided to the central beam guiding element that faces the other beam guiding element which is arranged facing the determination unit. Hence, the energy beam is reflected at the central beam guiding element and is guided to the other beam guiding element from where it is again reflected to the determination unit. Of course, it has to be assured that the orientations of the central beam guiding element, the determination unit and the other beam guiding element correspond in the corresponding determination position (in all determination positions) which is preferably performed by arranging the determination unit, the other beam guiding element and the central beam guiding element in a defined spatial relation building or forming the determination assembly, respectively.

Further, it is possible that the central beam guiding element is coupled to the determination unit in that the central beam guiding element moves / rotates together with the determination unit (and the beam guiding element) between the individual determination positions. Hence, it is assured that the central beam guiding element is also in the correct position. Besides, it is possible to statically arrange the central beam guiding element and position the other beam guiding element in that, if the energy beam is guided to the central beam guiding element it is automatically guided to the other beam guiding element and from there to the determination unit. In this alternative, the (other) beam guiding element has to be positioned in a defined determination position in which it can receive the energy beam from the central beam guiding element and guide the energy beam to the determination unit.

For example, the central beam guiding element may be mounted above the determination unit via a frame, in particular an L-shaped frame. The frame can be used to mount the central beam guiding element, wherein it is assured that the determination unit can receive the energy beam in at least one determination position, preferably in all determination positions, from the (other) beam guiding element, respectively. This can be achieved by moving the frame together with the determination assembly, i.e. together with the determination unit and the beam guiding element.

The at least one parameter of the energy beam may comprise or relate to an intensity of the energy beam and/or an intensity distribution of the energy beam and/or a geometry of the energy beam, in particular a spot shape and/or a spot size. In general, any arbitrary parameter of the energy beam can be determined as long as the determination unit comprises the corresponding detector. The determination unit may, for example, comprise a photo diode and/or a PSD sensor and/or a camera or the like.

Besides, the invention relates to an apparatus for additively manufacturing three-dimensional objects by means of successive layerwise selective irradiation and consolidation of layers of a build material which can be consolidated by means of an energy beam, wherein the apparatus comprises a determination device for determining at least one parameter of the energy beam, in particular an inventive determination device, as described before, wherein the determination device comprises a beam guiding element adapted to guide the energy beam to a determination unit which is adapted to determine at least one parameter of the energy beam, wherein the determination unit and the beam guiding element are arranged as a determination assembly in a defined spatial arrangement relative to each other, wherein the determination assembly is movable, in particular rotatable, into at least a first and a second determination position, wherein the determination unit is adapted to receive the energy beam being guided to a first spatial position from beam guiding element in the first determination position and to receive the energy beam being guided to a second spatial position from the beam guiding element in the second determination position.

The inventive apparatus may further be improved in that the irradiation device of the apparatus comprises at least two irradiation units, wherein the at least one determination device is arranged or arrangeable in a perpendicular incidence position of an energy beam guided via one of the irradiation units, wherein the energy beam is incident perpendicular on the build plane in the perpendicular incidence position. Hence, it is particularly preferred that the determination unit of the determination device may be arranged in the perpendicular incidence position, e.g. the rotational axis about which the determination unit and the beam guiding element may be rotated is in the same position as the optical axis of the energy beam being incident on the build plane.

Thus, it is possible that the energy beam is guided to the determination unit without influences on the determination process, e.g. variations of beam properties such as changes in the intensity distribution or the like, due to a misalignment of the energy beam wit respect to the determination unit or the beam guiding element, respectively. Of course, it is also possible that the apparatus comprises two or more irradiation units that are adapted to (generate and) guide an energy beam, wherein the determination device may be arranged in the perpendicular incidence position of one of the irradiation units, wherein correctional values may be generated for the other irradiation units. Hence, if an energy beam of an "off-axis" irradiation unit is to be determined, the corresponding correctional value or set of values may be used to compensate or take the influences on the energy beam properties into calculation.

Besides, it is also possible to reposition the determination device, wherein the determination device is preferably arranged in the perpendicular incidence position of the irradiation unit that is to be calibrated or of which irradiation unit the at least one parameter of the energy beam is to be determined.

Further it is possible that the determination device comprises a moving device that is adapted to move the determination unit and the beam guiding element as a determination assembly between at least two different perpendicular incidence positions assigned to at least two different irradiation units of the irradiation device. Thus, the moving device may (automatically) position the determination assembly, i.e. the determination unit and the beam guiding element which are mounted to the determination body, to the correct perpendicular incidence position, e.g. the perpendicular incidence position of the actual irradiation unit. It is also possible to integrate the function of the moving unit, as described before, in the moving device or alternatively, use the moving unit for moving the determination assembly between the at least two different perpendicular incidence positions.

Further, the invention relates to a method for operating an apparatus for additively manufacturing three-dimensional objects by means of successive layerwise selective irradiation and consolidation of layers of a build material which can be consolidated by means of an energy beam, in particular an inventive apparatus, as described before, comprising the steps:
- guiding the energy beam to a first spatial position
- positioning a beam guiding element of a determination device in a first determination position
- guiding the energy beam to a determination unit via the beam guiding element positioned in the first determination position, wherein the determination unit and the beam guiding element are arranged as a determination assembly in a defined spatial arrangement relative to each other, wherein the determination assembly is movable, in particular rotatable

- determining at least one parameter of the energy beam in the first spatial position
- guiding the energy beam to a second spatial position
- positioning the beam guiding element in a second determination position via a movement, in particular a rotation, of the irradiation assembly
- guiding the energy beam to the determination unit via the beam guiding element positioned in the second determination position
- determining at least one parameter of the energy beam in the second spatial position.

In other words, for determining the at least one parameter of the energy beam, the energy beam can be guided to a first spatial position, e.g. a position in the build plane. The beam guiding element of the determination device can be positioned in the first determination position matching the first position of the energy beam, in that the energy beam is incident on the beam guiding element. The energy beam is guided via the beam guiding element to the determination unit, wherein the beam guiding element is positioned in the first determination position or the beam guiding element and the determination unit are positioned in the first determination position, respectively. The determination unit and the beam guiding element are arranged as a determination assembly, i.e. arranged in a defined spatial arrangement (orientation, spatial position).

In this determination position in which the energy beam is incident on the beam guiding element and guided to the determination unit at least one parameter of the energy beam can be determined for the energy beam guided to the first spatial position. Subsequently, the energy beam may be guided to a second spatial position in which the at least one parameter of the energy beam has to be determined. Accordingly, the beam guiding element can be positioned in a second determination position in which the energy beam is incident on the beam guiding element to be guided to the determination unit. For example, it is possible to rotate the determination assembly comprising the beam guiding element and the determination unit around the rotation axis to position the beam guiding element in the second determination position.

Accordingly, the energy beam may be guided via the beam guiding element to the determination unit, wherein the beam guiding element is positioned in the second determination position in which it is illuminated via the energy beam. Thus, it is possible to determine at least one parameter of the energy beam for the energy beam being guided to the second spatial position.

Of course, all details, features and advantages described with respect to the inventive determination device are fully transferable to the inventive apparatus and the inventive method. Self-evidently, the inventive method may be performed on the inventive apparatus, preferably using an inventive determination device.

Exemplary embodiments of the invention are described with reference to the Fig. The Fig. are schematic diagrams, wherein
- Fig. 1: shows an inventive determination device in side view in a first determination position;
- Fig. 2: shows a top view of the inventive determination device from Fig. 1; and
- Fig. 3: shows the inventive determination device from Fig. 1 in side view in a second determination position.

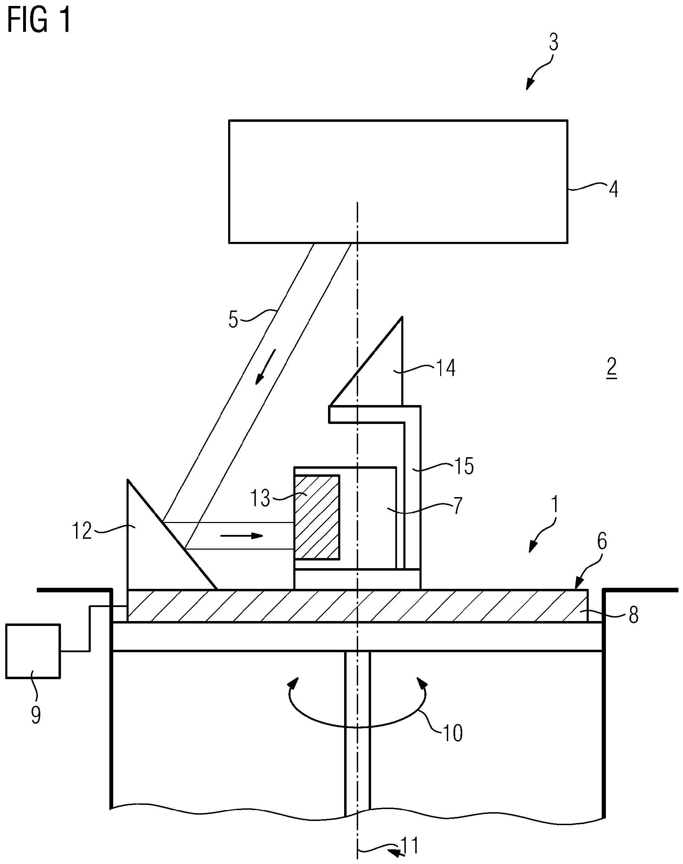

Fig. 1 shows a determination device 1 that is arranged in a process chamber 2 of an apparatus 3 for additively manufacturing three-dimensional objects. The apparatus 3 comprises an irradiation device 4 that is adapted to generate an energy beam 5 and guide the energy beam 5 across a build plane 6, i.e. a plane in which build material is arranged to be irradiated in a regular mode of operation.

Of course, the arrangement that is depicted in Fig. 1 is merely exemplary and any other arbitrary mode of arranging the determination device 1 in the process chamber 2 is also feasible. For example, it is not necessary that the additive manufacturing apparatus 3 comprises a height-adjustable carrying element, as depicted in Fig. 1.

The determination device 1 further comprises a determination unit 7 that is arranged centrally on a determination body 8, for example a metal plate. The determination body 8 can be moved via a moving unit 9, e.g. an actuator adapted to rotate the calibration body 8, as indicated via arrow 10, for example about a (vertical) rotation axis 11, e.g. a symmetry axis of the determination unit 7 and/or the determination body 8. The determination unit 7 is adapted to receive the energy beam 5 from a beam guiding element 12, as will be described below. The beam guiding element 12 and the determination unit 7 form a determination assembly, wherein the beam guiding element 12 and the determination unit 7 are arranged in a defined spatial arrangement, in particular in a defined relative position/orientation.

In other words, the determination unit 7 and the beam guiding element 12 are fixedly mounted to the determination body 8, wherein the beam guiding element 12 faces the determination unit 7, in particular a determination element 13 of the determination unit 7. It is also possible, for example with respect to multi laser systems or apparatuses with at least two irradiation units each adapted to guide an energy beam, that the moving unit 9 or a separate moving device (not shown) is adapted to move the determination assembly formed by the determination unit 7 and the beam guiding element 12, e.g. mounted to the determination body 8, between at least two different perpendicular incidence positions of two different irradiation units.

In the situation depicted in Fig. 1, the energy beam 5 is guided to the beam guiding element 12 which reflects the energy beam 5 to the determination unit 7, in particular to the determination element 13, such as an optical detector, preferably a PSD-sensor (camera). Therefore, the determination device 1 is adapted to determine the at least one parameter of the energy beam 5, such as an intensity of the energy beam 5 and/or an intensity distribution of the energy beam 5 and/or a geometry of the energy beam 5, in particular a spot shape and/or a spot size.

As described before with respect to Fig. 1, the determination unit 7 is depicted in a first determination position in which the energy beam 5 is guided to a first spatial position in which the energy beam 5 is incident on the beam guiding element 12 which is positioned in the first determination position. By rotating the determination assembly, i.e. the determination unit 7 (as indicated via arrow 10) and the beam guiding element 12, e.g. via a rotation of the determination body 8, the determination assembly can be moved between the different determination positions. Hence, if the at least one parameter of the energy beam 5 is to be determined in a different spatial position, the determination assembly can be rotated about the axis 11 to position the beam guiding element 12 in that spatial position in which the energy beam is incident on the beam guiding element 12 and can be guided to the determination unit 7, in particular to the determination element 13.

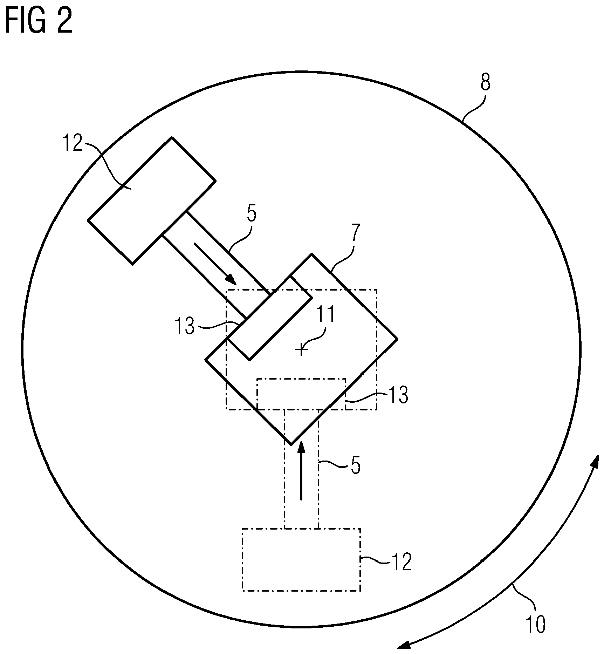

In Fig. 2, the determination position indicated in Fig. 1 is depicted in a top view, wherein a different determination position is indicated via a dashed contour. The dashed contour depicts a different determination position in which the determination assembly can be arranged, as indicated in Fig. 1 to determine the at least one parameter of the energy beam 5 incident in a different spatial position. To reach the situation that is depicted in Fig. 2, the determination unit 7 is rotated as indicated via arrow 10 clockwise (or counterclockwise) into the second determination position in which the determination element 13 of the determination unit 7 faces the second beam guiding element 14, as the entire determination assembly is rotated, e.g. via a rotational movement of the determination body 8. Hence, the energy beam 5 can be guided to the position of the determination body 8 in which the second beam guiding element 14 is arranged, wherein the beam guiding element 12 reflects the energy beam 5 towards the determination element 13 of the determination unit 7.

As can be derived from Fig. 2, the determination assembly can be rotated in various (arbitrary) determination positions in which the determination element 13 of the determination unit 7 can receive the energy beam 5 that is guided via the beam guiding element 12. Further, the two determination positions depicted in Fig. 2 are merely exemplary and any other arbitrary number or arrangement, in particular spatial arrangement of the determination assembly in the individual determination positions, is also feasible. Fig. 2 further shows that the determination unit 7 is arranged centrally on the determination body 8, e.g. centrally with respect to a movement path of the beam guiding element 12 with respect to a movement, in particular a rotation about the axis 11. In this exemplary embodiment, the movement path of the beam guiding element 12 is a circle.

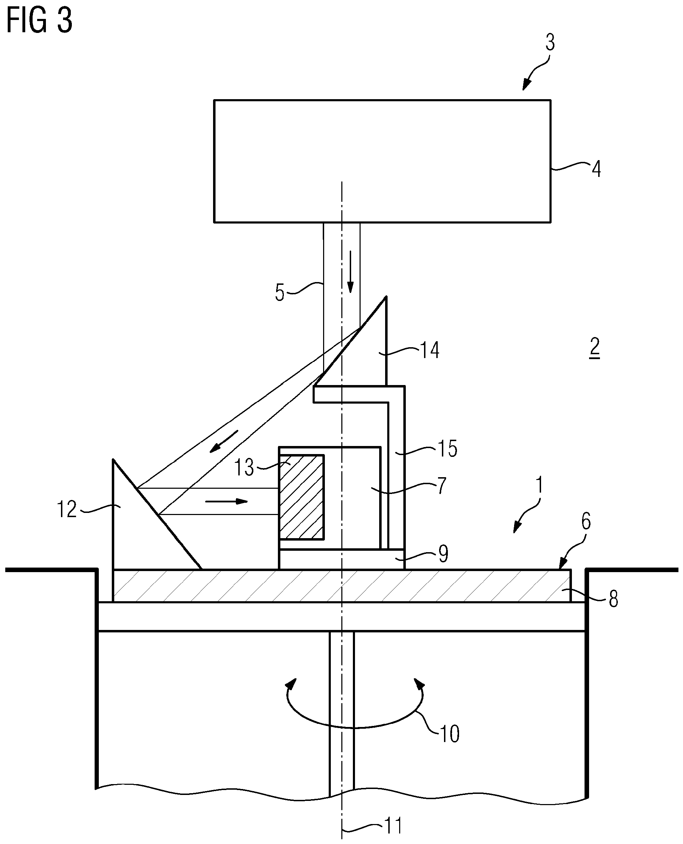

Fig. 3 shows another side view of the determination device 1 in which the at least one parameter of the energy beam 5 has to be determined for a central position of the energy beam 5, e.g. a perpendicular beam path along which, for example, the energy beam 5 is guided from the irradiation device 4 perpendicular towards the build plane 6. Thus, the energy beam 5 in this Fig. is guided via the corresponding irradiation unit (not shown) of the irradiation device 4 to the perpendicular incidence position in which the energy beam is incident perpendicular in the build plane (in a regular mode of operation). Hence, in this central position / perpendicular incidence position the rotation axis 11 is in the same position as the optical axis along which the energy beam 5 propagates through the process chamber 2.

With the energy beam 5 being guided to the central position, the energy beam 5 is incident on a central beam guiding element 14 that is mounted above the beam guiding unit 7. In this exemplary embodiment the central beam guiding element 14 is mounted on an L-shaped frame 15 which is mounted to the determination body 8. In other words, the frame 15 and the central beam guiding element 14 rotate together with the determination assembly, i.e. the determination unit 7 and the beam guiding element 12, ensuring that the determination element 13 is always available for the energy beam 5 to be guided via the beam guiding element 12 and to be incident on the determination element 13. The energy beam 5 that is incident on the central beam guiding element 14 is first reflected to the beam guiding element 12. Hence, the energy beam 5 is reflected at the central beam guiding element 14 and the (other) beam guiding element 12 towards the determination element 13.

The beam guiding elements 12, 14 can be built as (off-axis) parabolic mirrors for collimating the energy beam 5 and guiding the energy beam 5 to the determination element 13. The energy beam 5 is typically focused to a focal position that lies in advance to the beam guiding element 12 (or 14), wherein the beam guiding element 12 being built as parabolic mirror collimates the energy beam 5 and guides the energy beam 5 to the determination element 13. The energy beam 5 incident on the beam guiding element 12 diverges and is collimated via the beam guiding element 12. Hence, it can be assured that the at least one parameter of the energy beam 5 can be determined properly independent of the position and the angle of incidence.

Self-evidently, all details, features and advantages described with respect to the individual embodiments can arbitrarily be combined or exchanged. Of course, the inventive method may be performed on the inventive apparatus 3, preferably using the inventive determination device 1.

## Claims

1. Determination device (1) for determining at least one parameter of an energy beam (5) for an apparatus (3) for additively manufacturing three-dimensional objects by means of successive layerwise selective irradiation and consolidation of layers of a build material which can be consolidated by means of an energy beam (5), **characterized by** at least a beam guiding element (12) adapted to guide the energy beam (5) to a determination unit (7) which is adapted to determine at least one parameter of the energy beam (5), wherein the determination unit (7) and the beam guiding element (12) are arranged as a determination assembly in a defined spatial arrangement relative to each other, wherein the determination assembly is movable, in particular rotatable, into at least a first and a second determination position, wherein the determination unit (7) is adapted to receive the energy beam (5) being guided to a first spatial position from the beam guiding element (12) in the first determination position and to receive the energy beam (5) being guided to a second spatial position from the beam guiding element (12) in the second determination position.

2. Determination device according to claim 1, **characterized in that** the beam guiding element (12) and the determination unit (7) are mounted to a determination body (8), in particular a determination plate, which determination body (8) is moveable, in particular rotatable with respect to a rotation axis (11).

3. Determination device according to claim 1 or 2, **characterized in that** the determination body (8) is round, in particular circular.

4. Determination device according to claim 2 or 3, **characterized in that** the determination unit (7) is arranged centrally with respect to the beam guiding element (12), in particular on the rotation axis (11) of the determination body (8).

5. Determination device according to one of the preceding claims, **characterized in that** the beam guiding element (12) is moveable between two determination positions via a rotational movement around the determination unit (7), wherein the beam guiding element (12) is arranged facing towards the determination unit (7).

6. Determination device according to one of the preceding claims, **characterized in that** the beam guiding element (12) is built as or comprises a reflective element for reflecting the energy beam (5) towards the determination unit (7), in particular a parabolic mirror.

7. Determination device according to one of the preceding claims, **characterized in that** the beam guiding element (12) is adapted to collimate the energy beam (5).

8. Determination device according to one of the preceding claims, **characterized in that** the determination assembly is adapted to rotate in the at least two determination positions in a predefined order, in particular corresponding to a sequence in which the energy beam (5) is guided to the at least two spatial positions.

9. Determination device according to one of the preceding claims, **characterized by** at least one central beam guiding element (14) that is arranged above the determination unit (7) and adapted to guide the energy beam (5) to the beam guiding element (12), wherein the determination unit (7) is adapted to receive the energy beam (5) from the beam guiding element (12).

10. Determination device according to claim 9, **characterized in that** the central beam guiding element (14) is mounted above the determination unit (7) via a frame (15), in particular an L-shaped frame.

11. Determination device according to one of the preceding claims, **characterized in that** the at least one parameter of the energy beam (5) comprises or relates to an irradiation parameter, preferably an intensity of the energy beam (5) and/or an intensity distribution of the energy beam (5) and/or a geometry of the energy beam (5), in particular a spot shape and/or a spot size.

12. Apparatus (3) for additively manufacturing three-dimensional objects by means of successive layerwise selective irradiation and consolidation of layers of a build material which can be consolidated by means of an energy beam (5), wherein the apparatus (3) comprises a determination device (1) for determining at least one parameter of the energy beam (5), **characterized in that** the determination device (1) comprises a beam guiding element (12) adapted to guide the energy beam (5) to a determination unit (7) which is adapted to determine at least one parameter of the energy beam (5), wherein the determination unit (7) and the beam guiding element (12) are arranged as a determination assembly in a defined spatial arrangement relative to each other, wherein the determination assembly is movable, in particular rotatable, into at least a first and a second determination position, wherein the determination unit (7) is adapted to receive the energy beam (5) being guided to a first spatial position from beam guiding element (12) in the first determination position and to receive the energy beam (5) being guided to a second spatial position from the beam guiding element (12) in the second determination position.

13. Apparatus according to claim 12, **characterized in that** the irradiation device (4) of the apparatus (3) comprises at least two irradiation units, wherein the at least one determination device (1) is arranged in a perpendicular incidence position of an energy beam (5) guided via one of the irradiation units, wherein the energy beam (5) is incident perpendicular on the build plane (6) in the perpendicular incidence position.

14. Apparatus according to claim 13, **characterized in that** the determination device (1) comprises a moving device that is adapted to move the determination unit (7) and the beam guiding element (12) as a determination assembly between at least two different perpendicular incidence positions assigned to at least two different irradiation units of the irradiation device (4).

15. Method for operating an apparatus (3) for additively manufacturing three-dimensional objects by means of successive layerwise selective irradiation and consolidation of layers of a build material which can be consolidated by means of an energy beam (5), in particular an apparatus according to one of the claims 12 to 14, **characterized by**
- guiding the energy beam (5) to a first spatial position
- positioning a beam guiding element (12) of a determination device (1) in a first determination position
- guiding the energy beam (5) to a determination unit (7) via the beam guiding element (12) positioned in the first determination position, wherein the determination unit (7) and the beam guiding element (12) are arranged as a determination assembly in a defined spatial arrangement relative to each other, wherein the determination assembly is movable, in particular rotatable
- determining at least one parameter of the energy beam (5) in the first spatial position
- guiding the energy beam (5) to a second spatial position
- positioning the beam guiding element (12) in a second determination position via a movement, in particular a rotation, of the irradiation assembly
- guiding the energy beam (5) to the determination unit (7) via the beam guiding element (12) positioned in the second determination position
- determining at least one parameter of the energy beam (5) in the second spatial position.
